# EUROPÄISCHE PATENTANMELDUNG

(11) **EP 3 403 508 A1**
(43) Veröffentlichungstag der Anmeldung: **21.11.2018**
(21) Anmeldenummer: 17171647.5
(22) Anmeldetag: 18.05.2017
(51) Int. Cl.: A23D 7/05, A23D 7/005, A23C 15/06, A23D 7/00

(54) **STREICHFETTZUBEREITUNG, VERFAHREN ZU DESSEN HERSTELLUNG UND IHRE VERWENDUNG**

(71) Anmelder: DMK Deutsches Milchkontor GmbH, 27404 Zeven (DE)
(72) Erfinder: Wärner, Uwe, 27404 Elsdorf (DE); Stampe, Peter, 26655 Westerstede (DE)
(74) Vertreter: Fabry, Bernd

(57) **Zusammenfassung**

Vorgeschlagen wird eine Streichfettzubereitung, die dadurch erhältlich ist oder erhalten, wird, dass man:
(a) eine Rahmfraktion zur Verfügung stellt, die einen Gehalt von mindestens 40 Gew.-% Fett und mindestens 6 Gew.-% fettfreie Trockenmasse aufweist;
(b) die Rahmfraktion einer Temperaturreifung unterwirft;
(c) die gereifte Rahmfraktion verbuttert und die Buttermilch abtrennt
(d) die so erhaltene Butter mit Salz und Säuerungspermeat versetzt;
(e) die gesäuerte Butter bei 12 bis 16 °C mit einem bei dieser Temperatur flüssigen Pflanzenfett vermischt;
(f) der Mischung eine wässrige Phase zudosiert und
(g) die Mischung nach Homogenisierung und Kühlung abfüllt.

Das Verfahren zur Herstellung der Streichfettzubereitung sowie die Verwendung der Streichfettzubereitung werden auch beansprucht.

## Beschreibung

### GEBIET DER ERFINDUNG

Die Erfindung befindet sich auf dem Gebiet der Buttertechnologie und betrifft verbesserte Streichfettzubereitungen, ein ebenfalls verbessertes Verfahren zu ihrer Herstellung sowie die Verwendung der Produkte.

### STAND DER TECHNIK

**Streichfette** werden in der Ernährung verwendete Fette genannt, die bei Raumtemperatur schon fest, aber noch streichfähig sind. Beispiele sind Butter oder Margarine, aber auch Pflanzenfette. Chemisch gesehen handelt es sich bei Streichfetten um feste, plastische Emulsionen mit Fett als wesentlichem Bestandteil. Alle Streichfette müssen für den menschlichen Verzehr geeignet sein.

Nach Definition der Europäischen Kommission sind Streichfette *"Erzeugnisse mit einem Fettgehalt von mindestens 10 % und höchstens 90 % Massenanteil, die bei einer Temperatur von 20 C fest bleiben."*

Dagegen werden gemäß dieser Verordnung *"die Bezeichnungen 'Butter' und 'Margarine' nur für Erzeugnisse mit einem Fettgehalt von mindestens 80* %" verwendet. Hierdurch soll der Verbraucher vor möglichen Verwechslungen zwischen Butter, Margarine und sonstigen Streichfetten abweichenden Fettgehalts (z. B. Minarine) geschützt werden. Gemäß EG- bzw. EWG-Verordnung VO (EG) 2991/94 werden Streichfette in folgende drei Gruppen eingeteilt:
- **Milchfette:** Diese werden ausschließlich aus Milch oder bestimmten Milchprodukten hergestellt. Hierzu zählen: Butter, Dreiviertelfettbutter, Halbfettbutter und Milchstreichfett.
- **Fette:** Diese werden aus festen oder flüssigen Pflanzenfetten oder tierischen Fetten (Tierfett) gewonnen. Sie enthalten höchstens 3 % Milchfett. Die Erzeugnisse werden bezeichnet als: Margarine, Dreiviertelfettmargarine, Halbfettmargarine, Streichfett. Als pflanzlich bezeichnete Fette dürfen höchstens 2 % Fett tierischen Ursprungs enthalten.
- **Mischfette:** Diese werden schließlich aus festen oder flüssigen pflanzlichen oder tierischen Erzeugnissen, also Mischungen von diesen, hergestellt. Der Milchfettanteil darf bei Mischfetten zwischen 10 % und 80 % des Gesamtfettgehalts betragen. Die Erzeugnisse kommen als Mischfett, Dreiviertelmischfett, Halbmischfett oder Mischstreichfett in den Handel.

Streichfettzubereitungen, die sowohl Milchfett- als auch Pflanzenfettanteile aufweisen, haben in den letzten Jahren einen festen Platz neben Butter und Margarine gefunden, da sie einerseits auch direkt bei Entnahme aus dem Kühlschrank streichfähig wie Margarine sind, jedoch einen Geschmack aufweisen, der stärker an Butter erinnert.

Aus dem Stand der Technik sind Verfahren bekannt, nach denen sich solche Streichfettzubereitungen aus Mischfetten herstellen lassen, beispielsweise EP 1279338 A**,** WO 1999 043218 A1**,** WO 1999 051105 A1**,** US 4,298,625 **oder** US 6,136,349.

Aus der DK 171699 B1 ist ein Verfahren zur Herstellung eines Streichfettes bekannt. Die Masse enthält dabei eine Phase enthaltend 80 bis 83 Gew.-% Pflanzenöl, Wasser und Salz, von der ein Teil kontinuierlich in eine Butterphase eingeknetet und der andere am Schluss des Prozesses hinzugegeben wird.

Insbesondere in EP 1688044 B1 (DRAGSBAEK) wird ein Prozess vorgeschlagen, bei dem drei Stränge von Komponenten zusammengeführt werden: im ersten wird eine durch Erwärmen homogenisierte Pflanzenölmischung aus Raps- und Palmöl heruntergekühlt und mit einer Butter vermischt, deren Kristallstruktur mechanisch aufgebrochen werden muss, damit sie pumpbar wird. Über eine dritte Pumpe wird dann die Geschmackskomponente zudosiert, die aus einer wässrigen Mischung von Magermilchpulver und Salz besteht. Die Mischung erfolgt in einen Kristallisator und wird anschließend zum fertigen Streichfett konfektioniert, wobei als weitere zwingende Komponente Milchsäurebakterien zugegeben werden, um den Säuregehalt und damit den Geschmack des Produktes einzustellen. Dieses Verfahren hat eine Reih von entscheidenden Nachteilen: die Mischung aus Rapsöl und Palmöl muss erst einmal durch Erwärmen verflüssigt werden. Anschließend wird die Mischung wieder abgekühlt und kristallisiert und mit einer Butterphase vermischt, die jedoch durchkristallisert vorliegt und deren Kristallstruktur daher erst einmal mit hohem Energieeintrag aufgebrochen werden muss, damit sie pump- und dosierbar wird. Das resultierende Produkt erweist sich zudem als nicht ausreichend homogen, so dass ein Emulgator erforderlich ist; zu diesem Zweck wird der Mischung Magermilchpulver zugesetzt. Im Ergebnis erweist sich das Verfahren also als technisch aufwendig und mit hohen Energiekosten belastet. Auch Geschmack und Streichfähigkeit lassen Spielraum für Verbesserungen.

Die Aufgabe der vorliegenden Erfindung hat daher darin bestanden, den Stand der Technik dahingehend zu verbessern, dass auf das mechanische Aufbrechen der Kristallstruktur des Milchfettanteils ebenso verzichtet werden kann wie auf die Mitverwendung von Nahrungsmittelemulgatoren. Gleichzeitig sollten Streichfähigkeit und Geschmacksprofil der Produkte verbessert werden.

### BESCHREIBUNG DER ERFINDUNG

Ein erster Gegenstand der Erfindung betrifft eine Streichfettzubereitung, die dadurch erhältlich ist oder erhalten, wird, dass man:
(a) eine Rahmfraktion zur Verfügung stellt, die einen Gehalt von mindestens 40 Gew.-% Fett und mindestens 6 Gew.-% fettfreie Trockenmasse aufweist;
(b) die Rahmfraktion einer Temperaturreifung vorzugsweise bei 12 bis 14 °C unterwirft;
(c) die gereifte Rahmfraktion verbuttert und die Buttermilch abtrennt
(d) die so erhaltene Butter mit Salz und Säuerungspermeat versetzt;
(e) die gesäuerte Butter bei 12 bis 16 °C mit einem bei dieser Temperatur flüssigen Pflanzenfett vermischt;
(f) der Mischung eine wässrige Phase zudosiert und
(g) die Mischung nach Homogenisierung und Kühlung abfüllt.

Der Vorteil des erfindungsgemäßen Verfahrens besteht insbesondere darin, dass durch die genaue Temperaturführung einerseits bei der Rahmreifung und andererseits nach der Verbutterung jeweils Milchfette erhalten werden, die nur unvollständig auskristallisiert und daher noch pump- und förderbar sind. Auf diese Weise wird der Eintrag mechanischer Energie vermieden und die damit verbundenen hohen Kosten gespart. Ebenfalls nicht länger erforderlich ist die Mitverwendung von Magermilchpulvern, da die Massen so homogen sind, dass ein Emulgator nicht mehr erforderlich ist. Die Verwendung von Säuerungspermeat schon auf der Stufe der Verbutterung führt zudem zu einer Streichfettzubereitung mit deutlich buttrigerem Geschmacksprofil. Insgesamt zeichnen sich die Produkte zudem durch eine bessere Streichfähigkeit insbesondere bei einer Temperatur von 5 bis 8 °C aus.

Die erfindungsgemäßen Zubereitungen enthalten vorzugsweise mindestens 40 ("low fat") bzw. 75 Gew.-% Fett, insbesondere 76 bis 72 Gew.-% Fett. Bezogen auf die Fettphase enthalten sie ferner vorzugsweise 40 bis 60 Gew.-% und insbesondere etwa 50 Gew.-% Milchfett und jeweils in der Differenz zu 100 Gew.-% Pflanzenfett. Ferner ist bevorzugt, dass sie bezogen auf den Fettanteil mindestens 70 Gew.-% und insbesondere mindestens 80 Gew.-% Fett enthalten, das bei 20 °C fest vorliegt.

### HERSTELLVERFAHREN

Ein weiterer Gegenstand der Erfindung betrifft ein Verfahren zur Herstellung einer Streichfettzubereitung, umfassend oder bestehend aus der Abfolge der folgenden Schritte:
(a) Bereitstellung einer Rahmfraktion, die einen Gehalt von mindestens 40 Gew.-% Fett und mindestens 6 Gew.-% fettfreie Trockenmasse aufweist;
(b) Temperaturreifung der Rahmfraktion vorzugsweise bei 12 bis 14 °C;
(c) Verbutterung der gereiften Rahmfraktion und Abtrennung der Buttermilch;
(d) Versetzen der so erhaltenen Butter mit Salz und Säuerungspermeat;
(e) Vermischen der gesäuerten Butter bei 14 bis 16 °C mit einem bei dieser Temperatur flüssigen Pflanzenfett;
(f) Zudosieren einer wässrigen Phase und
(g) Homogenisieren, Kühlen und Abfüllen der Mischung.

### RAHMREIFUNG

Rahmfraktionen der genannten Art fallen typisch bei der Entfettung von Rohmilch an. Für das Verfahren entscheidend ist die nahfolgende Temperaturbehandlung, die als "Rahmreifung" bezeichnet wird. Die Rahmreifung dient zur intensiven Vorbereitung des Rahms auf den Butterungsprozess, wobei zwischen der physikalischen und der biochemischen Rahmreifung unterschieden wird.

Bei der vorliegenden physikalischen Rahmreifung wird die nach Verlassen des Separators etwa 50 °C heiße Rahmfraktion auf eine Temperatur von 11 bis 15 °C abgekühlt und dort für etwa 6 bis etwa 18 Stunden, vorzugsweise etwa 10 bis etwa 15 Stunden gehalten. Bei der Rahmreifung ist vorzugsweise nach dem Verfahren der Kalt-Warm-Kalt-Reifung vorzugehen. Die Kalt-Warm-Kalt Reifung bietet die größtmögliche Einflussnahme auf die zu erreichende Butterkonsistenz. Dabei wird der Rahm zwischenzeitlich mehrmals kurz auf Temperaturen um 20 °C erwärmt und dann wieder abgekühlt.

Die Rahmreifung beeinflusst folgende Kriterien
- Konsistenz, Schnittfestigkeit, Streichfähigkeit
- Grundwassergehalt der Butter (längere Haltbarkeit)
- Buttermilchfettgehalt
- Säuerung, Aromabildung
- Butterausbeute

Im Zuge der Rahmreifung bilden sich vier unterschiedliche Typen von Fettkügelchen aus:
Typ 1: Fettkügelchen mit dünner peripherer Kristallschicht und einem flüssigen Inneren.
Typ 2: Fettkügelchen mit dünner peripherer Kristallschicht sowie mit kristallinen Zusammenschlüssen und wenig flüssigem Fett im Inneren
Typ 3: Fettkügelchen mit dicken kristallinen Schalen und flüssigem Kern
Typ 4: Fettkügelchen mit dicken kristallinen Schalen sowie kristallinen Zusammenschlüssen und wenig flüssigem Fett im Inneren

### BUTTERUNG

Die gereifte Rahmfraktion wird anschließend klassisch verbuttert, d.h. der Rahm wird geschlagen und die Fettkügelchen des Milchfetts zerstört. Die Fetthülle bricht auf, das enthaltene Fett tritt aus und die Fettkügelchen verkleben miteinander. Dabei werden Teile der Fetthüllen, Wasser und etwas Milcheiweiß eingeschlossen. Aus der flüssigen Fett-in-Wasser-Emulsion wird eine feste Wasser-in-Fett-Emulsion. Der mit Abstand größte Teil dieser fettfreien Komponenten (Milchserum) tritt als Buttermilch aus und wird abgetrennt. Zurück bleibt eine Butter, die typisch 82 Gew.-% Fett, 2 Gew.-5% fettfreier Trockenmasse und 16 Gew.-% Wasser enthält.

Ein weiterer wesentlicher Aspekt der Erfindung besteht darin, dass die so erhaltene Butter unmittelbar nach der Butterung weiterverarbeitet wird, wobei man die Temperatur bei 14 bis 16 °C hält. Unter diesen Bedingungen ist die Butter nur teilweise kristallisiert und daher noch plastisch formbar, so dass es zur Vermischung mit den weiteren Komponenten lediglich eines Rührkessels oder Homogenisators bedarf. Auf diese Weise wird gegenüber dem Einsatz von Fertigbutter, die Kühlhaus gelagert und durchkristallisiert ist, das mechanische Aufbrechen der Kristallstruktur vermieden und Zeit und Energie eingespart.

### SÄUERUNG

Die resultierende Butter wird anschließend mit Salz und Säuerungspermeat versetzt. Dieser Schritt ist erforderlich, damit die Streichfettzubereitung einen buttrigen Geschmack erhält. Überraschenderweise hat sich dabei gezeigt, dass die Säuerung auf dieser Stufe unter Einsatz von Säuerungspermeat zu einer besseren Geschmacksbeurteilung führt, als der Zusatz von Milchsäurekulturen zum Endprodukt, wie dies für die Säuerung aus dem Stand der Technik bekannt ist.

Die Herstellung von Säuerungspermeat wird beispielsweise in DE 2652558 C3 (STICHTING) beschrieben. Demnach wird der Säuerungsprozess zur Bildung von aromatischen Stoffen wird am besten in Magermilch unter Verwendung von Mikroorganismen durchgeführt, die aromabildende Stoffe, insbesondere Diacetyl und α-Acetylmilchsäure, erzeugen. Am besten geeignet zu diesem Zwecke sind Starter, die *Leuconostoc cremoris* (sogenannte B-Starter), aber insbesondere solche, die gewisse Stämme von *Streptococcus diacetilactis* (sogenannte D-Starter), sowie deren Gemische (BD-Starter) enthalten. Auch saure oder süße Molke, Fraktionen derselben, die nach physikalischen Trennmethoden daraus oder aus Magermilch erhalten werden, und andere bekannte Kulturmedien eignen sich zum Inkubieren der aromabildenden Bakterien. Die Inkubation von Milchsäurebakterien (Milchsäurestarter) in Flüssigkeiten auf Molkenbasis ist aus der NL-OS 72 05 909 bekannt. Es ist auch bekannt, den Diacetylgehalt bei solchen aromatischen Startern dadurch zu erhöhen, dass man die Kultur in Bewegung hält. Auf diese Weise wird eine Umwandlung von α-Acetylmilchsäure in Diacetyl durch Oxidation angeregt. Es hat sich jedoch herausgestellt, dass nach dem Einkneten von solchen, in Bewegung gehaltenen Startern in Butterkorn oder Butter, die durch Verbuttern von ungesäuertem Rahm erhalten worden ist, während des Reifungsprozesses der Butter eine viel stärkere zusätzliche Bildung von Diacetyl stattfindet als in Butter, die durch Verbuttern von Sauerrahm erhalten worden ist, oder in Butter aus Süßrahm, der durch Zusatz einer Lösung von chemisch reiner Milchsäure angesäuert worden ist. Daher ist die Feuchtigkeitsverteilung durch Trockenkneten wichtig. Je gröber diese ist, desto mehr Diacetyl bildet sich nachträglich, und in Abhängigkeit davon wird man mehr oder weniger starke aromabildende Starter oder Gemische derselben verwenden.

Die aromatischen Starter können als solche, aber auch nach Entfernung des Proteins eingeknetet werden, in welchem Falle zunächst eine Konzentrierung der aromatischen Stoffe nach einem an sich bekannten Verfahren durchgeführt worden sein kann. Nach einer der obengenannten Behandlungen kann der aromatische Starter gegebenenfalls wieder als Kulturmedium, nämlich für Milchsäurebakterien, die viel Milchsäure bilden, verwendet werden.

Das Säuerungsverfahren zur Erzielung eines hohen Milchsäuregehalts kann auch in Magermilch durchgeführt werden; vorzugsweise verwendet man jedoch andere Kulturmedien auf Milchbasis, sofern sie nur als genügend starke Puffer gegen das durch Milchsäurebildung bedingte Absinken des pH-Wertes wirken, so dass keine Puffersalzgemische zugesetzt zu werden brauchen. Geeignete Kulturmedien sind süße oder saure Molke, die bei der Herstellung von Käse, Quark oder Hüttenkäse anfällt, insbesondere aber die Mutterlauge von Molke, die zur Erzeugung von Lactose verwendet worden ist, oder Lösungen von daraus gewonnenen, lactosearmen Molkenpulvern. Die beiden letztgenannten Kulturmedien werden bevorzugt, da bei ihnen das Verhältnis des Molkenproteingehalts zu dem Lactosegehalt günstig für die Erzielung eines hohen Milchsäuregehalts und eines hohen Verhältnisses zwischen der entstehenden Milchsäure und der unfermentierten Lactose ist. In diesem Falle soll bei der nachfolgenden Konzentrierung keine Trübung durch Kristallisation von Lactose auftreten.

Die Pufferwirkung des Molkenproteins ermöglicht einen hohen Milchsäuregehalt, und der pH-Wert sinkt nicht unter die Höhe, bei der die Stoffwechselprozesse der Milchsäurebakterien zum Stillstand kommen. In den meisten Kulturen von Milchsäurebakterien liegt dieser Wert im Bereich von 4,3 bis 4,6. Vorzugsweise verwendet man aber Milchsäurebakterien, die bei ihrem Stoffwechsel weniger empfindlich gegen niedrige pH-Werte sind. Eine besonders geringe Empfindlichkeit gegen hohe Acidität findet sich bei *Lactobacillus helveticus,* der noch bei pH-Werten unter 3,3 gedeiht.

Mit dieser besonderen Spezies erzielt man, besonders in gut gepufferten Kulturmedien, hohe Milchsäuregehalte, z. B. von 20 bis 25 g/l. Durch Anwendung bekannter Konzentrierungsverfahren lässt sich dieser Prozentsatz nochmals stark erhöhen. Ferner ist es besonders vorteilhaft, besonders bei Verwendung eines lactosearmen Kulturmediums, die Kultur vor dem Konzentrieren durch Ultrafiltration in ein proteinreiches Retentat und ein proteinarmes Permeat zu zerlegen. Das Permeat kann dann wiederum durch Vakuumverdampfung oder durch Membranfiltration (Umkehrosmose) und gegebenenfalls anschließende Verdampfung konzentriert werden. Auf diese Weise kann das Verhältnis von Molkenprotein zu Milchsäure beträchtlich vermindert werden, z. B. von 0,20 in dem *Lactobacillus helveticus-*Starter auf 0,12 in dem Permeat und weniger als 0,07 in dem Permeat der umgekehrten Osmose. Wenn dieses letztgenannte Permeat dann noch eingedampft wird, lässt sich ziemlich leicht ein Milchsäuregehalt von mehr als 35 Gew.-% erreichen.

Von diesen stark sauren und verhältnismäßig wenig gepufferten Milchsäurelösungen benötigt man, nachdem man sie in aus ungesäuertem Rahm erzeugte Butter eingeknetet hat, nur ganz geringe Mengen zum Herabsetzen des pH-Wertes des Butterserums unter 5,3. Mit 1 Gew.-% eines solchen Konzentrats und 1 Gew.-% eines aromatischen Starters lassen sich pH-Werte von 4,0 erzielen. Oft kann der erforderliche herabgesetzte pH-Wert mit einem Konzentrat bei Verwendung von höchstens 0,5 Gew.-% erreicht werden.

Um den oben erwähnten hohen Milchsäuregehalt zu erzielen, sollte das Permeat stark eingedampft werden, und eine Kristallisation der Lactose vermieden werden. Daher sollte das Kulturmedium, in dem die Milchsäurebakterien inkubiert werden, vorzugsweise einen niedrigen Lactosegehalt aufweisen (lactosearme Molke). Zum Verständnis sei noch einmal darauf hingewiesen, dass das so gewonnene Säuerungspermeat keine lebenden Bakterienkulturen mehr enthalten.

Die Salzmenge, die man der gereiften Rahmfraktion zusetzt, liegt typisch im Bereich von 0,1 bis etwa 4 Gew.-%, vorzugsweise bei 0,5 bis 2 Gew.-%. Das Säuerungspermeat wird in üblicherweise in solchen Mengen zugegeben, dass sich ein pH-Wert von etwa 4,0 bis etwa 6,0 und insbesondere etwa 4,2 bis etwa 5,0 einstellt.

### ZUGABE DES PFLANZENFETTS

Geeignete Pflanzenfette, die der Buttermasse zugesetzt werden, sind flüssig und typischerweise ausgewählt aus der Gruppe, die gebildet wird von Palmöl, Rapsöl alter und neuer Züchtung, Distelöl, Olivenöl, Sonnenblumenöl, Leinöl und deren Gemischen. Problematisch dabei ist, dass beispielsweise Palmöl einen besonders vorteilhaften Geschmack aufweist, jedoch bei 20 °C fest vorliegt und daher erwärmt werden muss, um pumpbar zu werden. Daher hat es sich als vorteilhaft erwiesen, Mischungen von Palmöl und weiteren bei 20 °C flüssigen Pflanzenfetten - also Pflanzenölen - zuzugeben. Unter Berücksichtigung von Schmelzpunkt und geschmacklichen Aspekten haben sich Gemische von Palmöl und Rapsöl als besonders vorteilhaft erwiesen, zumal Mischungen mit bis zu 50 Gew.-% Palmöl bei 20 °C immer noch flüssig sind. Typischerweise werden Palmöl und Rapsöl im Gewichtsverhältnis von etwa 40:60 bis etwa 60:40 und insbesondere etwa 50:50 eingesetzt. Die Zudosierung der Mischung zum Rahm erfolgt vorzugsweise so, dass bezogen auf die Fettphase 40 bis 60 Gew.-% Milchfett und jeweils in der Differenz zu 100 Gew.-% Pflanzenfett vorliegen.

### ZUGABE DER WÄSSRIGEN PHASE

Die wässrige Phase kann zwar grundsätzlich zusammen mit dem flüssigen Pflanzenfett zudosiert werden, bedarf dann aber der Zugabe eines Emulgators. Das erfindungsgemäße Verfahren sieht daher eine separate Zudosierung vor. Die Menge beträgt üblicherweise etwa 10 bis 50 Gew.-% und vorzugsweise etwa 15 bis 25 Gew.-% bezogen auf die Fettphase, also die Summe von Milch- und Pflanzenfett. Vorzugsweise setzt man eine wässrige Salzlösung zu, die im Bedarfsfall auch weitere Komponenten gelöst enthalten kann, beispielsweise wasserlösliche Aromen. Ist die Masse ausreichend homogenisiert, kann sie direkt in die Endverpackungen abgefüllt werden.

Eine typische erfindungsgemäße Streichfettzubereitung wird erhalten, indem man alle Schritte soweit nicht anders angegeben unterhalb einer Temperatur von 22 °C und vorzugsweise bei Raumtemperatur durchführt, und weist dann folgende Zusammensetzung auf:
(a) etwa 30 bis etwa 40 und vorzugsweise etwa 35 Gew.-% Milchfett;
(b) etwa 30 bis etwa 40 und vorzugsweise etwa 35 Gew.-% Pflanzenfett, vorzugsweise Palmöl und Rapsöl im Gewichtsverhältnis von etwa 40:60 bis etwa 60:40;
(c) 0,5 bis etwa 4, vorzugsweise etwa 1 bis etwa 2 Gew.-% (Koch-)Salz und/oder Aromen sowie
(d) ad 100 Gew.-% Wasser

### GEWERBLICHE ANWENDBARKEIT

Ein weiterer Gegenstand der Erfindung betrifft die Verwendung der neuen Streichfette als Lebensmittel, speziell als Butterersatz.

### BEISPIELE

### BEISPIEL 1

Rohmilch wurde auf einen Separator gegeben und in Magermilch und eine Rahmfraktion aufgetrennt. Die Rahmfraktion besaß einen Fettanteil von 40 Gew.-% sowie 6 Gew.-% fettfreie Trockenmasse. Die Fraktion wurde nach dem Verlasen des Separators von etwa 50 °C auf 12 °C abgekühlt und bei dieser Temperatur für 12 Stunden belassen, wobei sie zwischenzeitlich übe einen Zeitraum von etwa 3 Stunden auf 20 °C erwärmt wurde. Nach dem Ende der Reifung war die Fraktion zu 62 Gew.-% durchkristallisiert, jedoch nach wie vor plastisch und formbar. Die gereifte Rahmfraktion wurde in eine Butterungsmaschine gegeben und bis zur Verfestigung geschlagen. Die Rohbutter war leicht knetbar, wurde mehrmals mit Wasser gewaschen und mit 2 Gew.-% Kochsalz sowie einer solchen Menge an Säuerungspermeat versetzt, dass sich ein pH-Wert von 4,8 einstellte. Anschließend wurde die gesäuerte Butter bei 14 °C in einen Mischer überführt, in dem sie mit einer gleichen Menge eines auf Raumtemperatur vortemperierten flüssigen Gemischs aus 60 Gew.-% Raps- und 40 Gew.-% Palmöl versetzt wurde. Gleichzeitig wurde eine 1 Gew.-%ige wässrige Kochsalzlösung zugegeben und zwar in einer Menge die etwa 15 Gew.-% der Fettmasse entsprach. Die Masse wurde homogenisiert und anschließend in sterile Schalen abgefüllt und verpackt.

### VERGLEICHSBEISPIEL V1

In einer Mischvorrichtung wurde analog EP 1688044 B1 **bei 20 °C** 50 Gew.-% Butter, die zuvor durch Eintrag mechanischer Energie plastifiziert worden war, 25 Gew.-% einer Mischung aus Rapsöl und Palmöl (60:40) und 25 Gew.-% einer wässrigen Phase enthaltend 14 Gew.-% Magermilchpulver, 3 Gew.-% Kochsalz, 5 Gew.-% Milchsäurebakterien und ad 100 Gew.-% Wasser vorgelegt und bei 20 °C über einen Zeitraum von 60 Minuten homogenisiert. Anschließend wurde die Masse in sterile Schalen abgefüllt und verpackt.

### BEURTEILUNG DER BEIDEN PRODUKTE

Beide Produkte wurden über einen Zeitraum von 3 Stunden bei 5 °C gelagert und dann deren Streichfähigkeit zum einen unmittelbar nach der Entnahme und zum anderen nach 10 Minuten Lagerung bei Raumtemperatur sowie der Geschmack von 5 Testern auf einer Skala von (1) = fest bis (5) = ölig bzw. (1) = buttrig bis (5) = geschmacksarm bewertet. Die Ergebnisse sind in Tabelle 1 zusammengefast; angegeben sind die Mittelwerte.

**Tabelle 1**

| Bewertung der Streichfette | | |
|---|---|---|
| **Produkte gemäß Beispiel** | **1** | **V1** |
| Streichfähigkeit sofort | 4 | 3 |
| Streichfähigkeit nach 10 Minuten | 4 | 5 |
| Geschmack | 2 | 3 |

Die erfindungsgemäße Zubereitung zeigte eine konstant hohe Streichfähigkeit, während das Vergleichsprodukt einen härteren Eindruck hinterließ, jedoch nach 10 Minuten deutlich weicher wurde, dabei aber Öltröpfchen ausschied. Das erfindungsgemäße Produkt wurde zudem als deutlich "buttriger" beurteilt.

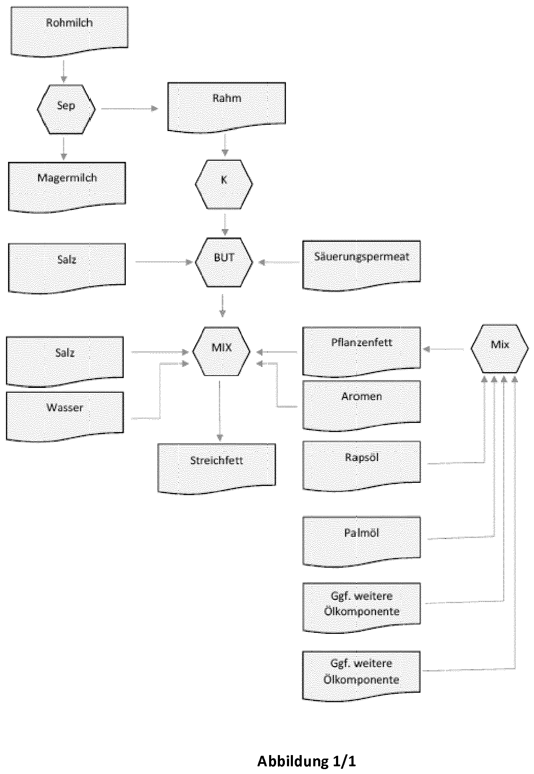

Die Erfindung wird nachfolgend exemplarisch in einem Fließschema **(****Abbildung 1****)** erläutert. Dabei haben die Abkürzungen folgende Bedeutung:
SEP = Separator
K = Kühler
MIX = Mischer
BUT = Butterung

## Patentansprüche

1. Streichfettzubereitung, dadurch erhältlich oder erhalten, dass man:
(a) eine Rahmfraktion zur Verfügung stellt, die einen Gehalt von mindestens 40 Gew.-% Fett und mindestens 6 Gew.-% fettfreie Trockenmasse aufweist;
(b) die Rahmfraktion einer Temperaturreifung unterwirft;
(c) die gereifte Rahmfraktion verbuttert und die Buttermilch abtrennt
(d) die so erhaltene Butter mit Salz und Säuerungspermeat versetzt;
(e) die gesäuerte Butter bei 12 bis 16 °C mit einem bei dieser Temperatur flüssigen Pflanzenfett vermischt;
(f) der Mischung eine wässrige Phase zudosiert und
(g) die Mischung nach Homogenisierung und Kühlung abfüllt.

2. Zubereitung nach Anspruch 1, **dadurch gekennzeichnet, dass** sie mindestens 75 Gew.-% Fett enthält.

3. Zubereitung nach den Ansprüchen 1 und/oder 2, **dadurch gekennzeichnet, dass** sie bezogen auf die Fettphase 40 bis 60 Gew.-% Milchfett und jeweils in der Differenz zu 100 Gew.-% Pflanzenfett enthält.

4. Zubereitung nach mindestens einem der Ansprüche 1 bis 3, **dadurch gekennzeichnet, dass** sie bezogen auf den Fettanteil mindestens 70 Gew.-% Fett enthält, das bei 20 °C fest vorliegt.

5. Verfahren zur Herstellung einer Streichfettzubereitung, umfassend oder bestehend aus der Abfolge der folgenden Schritte:
(a) Bereitstellung einer Rahmfraktion, die einen Gehalt von mindestens 40 Gew.-% Fett und mindestens 6 Gew.-% fettfreie Trockenmasse aufweist;
(b) Temperaturreifung der Rahmfraktion;
(c) Verbutterung der gereiften Rahmfraktion und Abtrennung der Buttermilch;
(d) Versetzen der so erhaltenen Butter mit Salz und Säuerungspermeat;
(e) Vermischen der gesäuerten Butter bei 12 bis 16 °C mit einem bei dieser Temperatur flüssigen Pflanzenfett;
(f) Zudosieren einer wässrigen Phase und
(g) Homogenisieren, Kühlen und Abfüllen der Mischung.

6. Verfahren nach Anspruch 5, **dadurch gekennzeichnet, dass** man die Reifung über einen Zeitraum von 6 bis 18 Stunden vornimmt.

7. Verfahren nach den Ansprüchen 5 und/oder 6, **dadurch gekennzeichnet, dass** man der Butter 0,1 bis 4 Gew.-% Salz zusetzt.

8. Verfahren nach mindestens einem der Ansprüche 5 bis 7, **dadurch gekennzeichnet, dass** man der Butter eine solche Menge an Säuerungspermeat zusetzt, dass sich ein pH-Wert von etwa 4,0 bis 6,0 einstellt.

9. Verfahren nach mindestens einem der Ansprüche 5 bis 8, **dadurch gekennzeichnet, dass** man der Butter ein flüssiges Pflanzenfett zusetzt, das ausgewählt ist aus der Gruppe, die gebildet wird von Palmöl, Rapsöl alter und neuer Züchtung, Distelöl, Olivenöl, Sonnenblumenöl, Leinöl und deren Gemischen.

10. Verfahren nach Anspruch 9, **dadurch gekennzeichnet, dass** man eine Mischung aus Palmöl und Rapsöl einsetzt.

11. Verfahren nach Anspruch 10, **dadurch gekennzeichnet, dass** man eine Mischung aus Palmöl und Rapsöl im Gewichtsverhältnis von etwa 40:60 bis etwa 60:40 einsetzt.

12. Verfahren nach mindestens einem der Ansprüche 5 bis 11, **dadurch gekennzeichnet, dass** man eine Mischung herstellt, die bezogen auf die Fettphase 40 bis 60 Gew.-% Milchfett und jeweils in der Differenz zu 100 Gew.-% Pflanzenfett enthält.

13. Verfahren nach mindestens einem der Ansprüche 5 bis 12, **dadurch gekennzeichnet, dass** man der Fettphase etwa 10 bis 50 Gew.-% der wässrigen Phase zusetzt.

14. Verfahren nach mindestens einem der Ansprüche 5 bis 13, **dadurch gekennzeichnet, dass** man eine wässrige Phase zusetzt, die Salze und/oder Aromen enthält.

15. Verwendung der Streichfettzubereitung nach mindestens einem der Ansprüche 1 bis 4 als Butterersatz.
